# EUROPEAN PATENT APPLICATION

(11) **EP 3 091 221 A1**
(43) Date of publication of application: **09.11.2016**
(21) Application number: 14866249.7
(22) Date of filing: 25.11.2014
(51) Int. Cl.: F03B 13/26, F03B 17/06

(54) **TIDAL CURRENT POWER GENERATION STRUCTURE**

(30) Priority: 27.11.2013 KR 20130145054
(71) Applicant: Lee, Jai-Hyuk, Seoul 143-916 (KR); Lee, Jae-Wook, Gwangju-si, Gyeonggi-do 464-927 (KR); Lee, Jae-Hwan, Busan 608-757 (KR)
(72) Inventor: Lee, Jai-Hyuk, Seoul 143-916 (KR); Lee, Jae-Wook, Gwangju-si, Gyeonggi-do 464-927 (KR); Lee, Jae-Hwan, Busan 608-757 (KR)
(74) Representative: Peters, Sebastian Martinus
(86) International application number: PCT/KR2014/011384
(87) International publication number: WO 2015/080451

(57) **Abstract**

A power generation structure according to an embodiment of the present invention comprises: terrain features spaced apart from each other at a first interval to thereby form a watercourse through which water can move in the front and rear directions; watercourse banks having a width narrower than the first interval and disposed on the watercourse to thereby respectively form equal-width watercourses having a constant width between the terrain features; a first water collecting bank disposed on the watercourse and formed in the shape of a tip extending from the front end of the watercourse bank on the basis of the moving direction of a tidal current, with the width being gradually decreased toward the front of the equal-width watercourse; and a second water collecting bank disposed on the watercourse and formed in the shape of a tip extending from the rear end of the watercourse bank on the basis of the moving direction of the tidal current, with the width being gradually decreased toward the rear of the equal-width watercourse.

## Description

### Technical Field

The present invention relates to a tidal current power generation structure, and in particular to a tidal current power generation structure which is able to maximize the generation of electric power in such a way to use both the high tide and the ebb tide at sea for the sake of a tidal current power generation.

### Background Art

A tidal power plant method, in general, is a method to generate electric power with the aid of a water level difference between the come and go of the tide. Water can be artificially stored in a predetermined reservoir surrounded by banks during the high tide, and a watercourse can be opened during the ebb tide, thus generating electric power. In case of a power generator employing the aforementioned tidal power plant method, the electric power generations may be carried out only twice to the maximum.

### Disclosure of Invention

### Technical Problem

Accordingly, it is an object of the present invention to provide a tidal current power generation structure which is able to generate electric power four times a day by effectively using tides.

Other objects of the present invention will become apparent along with the detailed descriptions below and the drawings.

### Solution to Problem

To achieve the above objects, there is provided a tidal current power generation structure, which may include, but is not limited to, terrain features which are disposed spaced apart from each other at a first interval and include a watercourse formed for tidal current to move in the front and rear directions; a watercourse bank which has a predetermined width narrower than the first interval and is provided at the watercourse, wherein an equal-width watercourse having a constant width is provided between the terrain features and the watercourse bank; a first water collecting bank which is disposed at the watercourse and formed in the shape of a tip extending from the front end portion of the watercourse bank with respect to a moving direction of the tidal current, wherein the width of the first water collecting bank is gradually decreasing toward a front end portion of the equal-width watercourse; and a second water collecting bank which is disposed at the watercourse and formed in the shape of a tip extending from the rear end portion of the watercourse bank with respect to a moving direction of the tidal current, wherein the width of the second water collecting bank is gradually decreasing toward a rear end portion of the equal-width watercourse.

The tidal current power generation structure may further include a ship waterway structure which is disposed outside the watercourse bank and the first and second water collecting banks and at the watercourse, wherein the ship waterway structure may include, but is not limited to, a ship waterway bank which is provided spaced apart from the terrain features and is adapted to form a pass watercourse having a predetermined width between the terrain features and the ship waterway bank; an equal-width watercourse side bank which is disposed between the ship waterway bank and the watercourse bank and has a predetermined length corresponding to the watercourse bank with respect to the moving direction of the tidal current; a first ship waterway water collecting bank which is provided in front of the ship waterway bank and the equal-width watercourse side bank with respect to the moving direction of the tidal current and is adapted to interconnect the ship waterway bank and the equal-width watercourse side bank, wherein the first ship waterway water collecting bank is formed inwardly slanted toward the watercourse bank; and a second ship waterway water collecting bank which is provided behind the ship waterway bank and the equal-width watercourse side bank with respect to the moving direction of the tidal current and is adapted to interconnect the ship waterway bank and the equal-width watercourse side bank, wherein the second ship waterway water collecting bank is formed inwardly slanted toward the watercourse bank, wherein the ship waterway bank is longer than the equal-width watercourse side bank with respect to the moving direction of the tidal current.

### Advantageous Effects

The tidal current power generation structure according to an embodiment of the present invention is able to improve an electric power generation efficiency since a power generator installed at an equal-width watercourse can generate electric power during both the ebb tide and the high tide, whereby a power generation efficiency can be improved.

The tidal current power generation structure according to an embodiment of the present invention is able to improve an electric power generation efficiency since a plurality of equal-width watercourses are provided, wherein each equal-width watercourse is able to generate electric power, thus improving the electric power generation efficiency.

The tidal current power generation structure according to an embodiment of the present invention does not interfere with any pass of a water transportation means since the water transportation means is able to move along the pass watercourse.

The tidal current power generation structure according to an embodiment of the present invention is able to provide a good space applicability since the space of an electric power generation structure can be used as a space for the sake of an architecture structure, a facility, etc.

### Brief Description of Drawings

Figure 1 is a schematic view illustrating a configuration wherein a tidal current power generation structure according to an embodiment of the present invention is installed at a river near a sea or at the mouth of a stream.
Figure 2 is a schematic view illustrating a configuration wherein a tidal current power generation structure according to an embodiment of the present invention, in which a plurality of equal-width watercourses have been disposed, is installed at a river near a sea or at the mount of a stream.
Figure 3 is a schematic view illustrating a configuration wherein a tidal current power generation structure according to an embodiment of the present invention is installed only at a seashore.
Figure 4 is a schematic view illustrating a configuration wherein a tidal current power generation structure according to an embodiment of the present invention is installed in a space defined between islands.
Figure 5 is a schematic view illustrating a tidal current power generation structure according to an embodiment of the present invention is installed in a space defined between a seashore and an island.

### Best modes for carrying out the invention

The embodiments of the present invention will be described with reference to the accompanying drawings. The embodiments of the present invention may be modified into various forms, the scopes of which should not be interpreted as limited to the embodiments below. These embodiments are provided to describe in details the present invention to a person having ordinary skill in the art. Moreover, the shape of each component in the drawings may be emphasized or exaggerated for the sake of clearer descriptions.

The power generator at the tidal current power generation plant, in general, is configured to generate electric energy in such a way to use the kinetic energy of water. At a river near a sea or the mouth of a stream, seawater comes into the river or the stream during the high tide, and the seawater, which has come in, goes out toward the sea during the ebb tide. The aforementioned phenomenon occurs twice a day from the ebb tide to the high tide at the time of the high tide and also occurs twice a day from the high tide to the ebb tide at the time of the ebb tide. Since the conventional tidal current power generation plant is able to generate electric power only when there is a strong tidal current, there is an evitable limit due to geometric conditions. The construction of bank structures may cause an environmental problem.

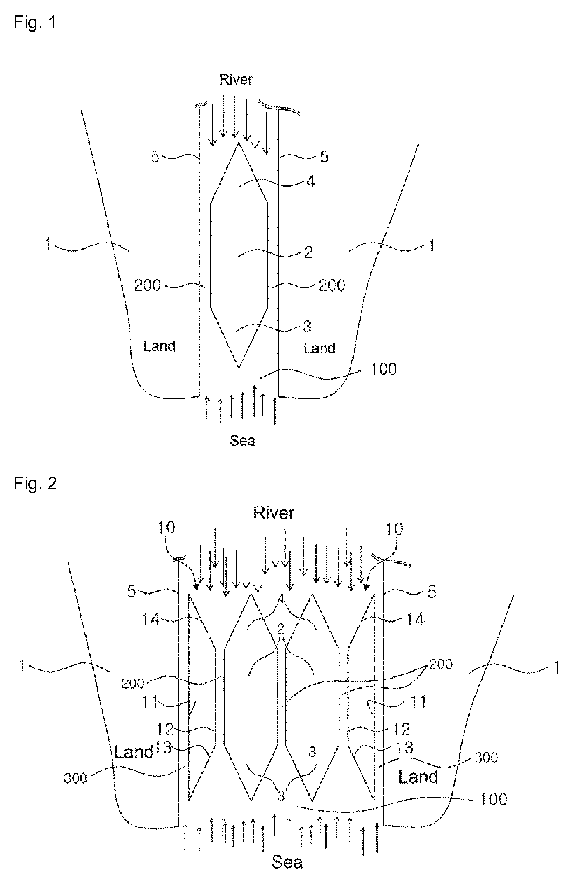

Figure 1 is a schematic view illustrating a configuration wherein a tidal current power generation structure according to an embodiment of the present invention is installed at a river near a sea or at the mouth of a stream.

As illustrated in Figure 1, the tidal current power generation structure according to an embodiment of the present invention may include, but is not limited to, a watercourse 100 provided between terrain features 1 which are spaced apart at a first interval, a watercourse bank 2 which has a width narrower than the first interval and is disposed at the watercourse 100, and first and second water collecting banks 3 and 4 which are disposed at the front and rear portions of the watercourse bank 2. An equal-width watercourse 200 having a constant width is provided between the watercourse bank 2 and the terrain features 1. The power generator is installed at the equal-width watercourse 200 and is able to generate electric power using the kinetic energy of tidal currents at the equal-width watercourse 200.

Since the widthwise cross section of the equal-width watercourse 200 is narrower than the widthwise cross section of the watercourse 100, the tidal current passing through the equal-width watercourse 200 is faster than the tidal current passing through the watercourse 100. For this reason, the power generator is installed at the equal-width watercourse 200 defined by the watercourse bank 2, whereby the power generation efficiency can be improved due to the faster tidal currents during the generation of the electric power.

Since the tidal currents occur at the equal-width watercourse 200 at the time of both the ebb tide and the high tide, the power generator can be driven four times a day by using the tidal currents at the time of the high tide and the ebb tide. Since the operation time of the power generator increases, the electric power generation efficiency can be improved.

The first water collecting bank 3 is disposed at the watercourse 100 and extends from a front end portion of the watercourse bank 2 with respect to the moving direction of the tidal current. The first water collecting bank 3 is configured in such a way that the width thereof is gradually decreasing in the forward direction. The second water collecting bank 4 is disposed at the watercourse 100 and extends from a rear end portion of the watercourse bank 2 with respect to the moving direction of the tidal current. The second water collecting bank 4 is configured in such a way that the width thereof is gradually decreasing the backward direction, whereby the water which is flowing through the watercourse 100 can be guided to naturally flow into the width-equal watercourse 200, while preventing any damage to the watercourse bank 2 which might occur due to the collision of flowing water.

The watercourse bank 2, and the first and second water collecting banks 3 and 4 are not limited to the shapes illustrated in Figure 1, the shapes of which may be determined based on the topography of the river or the mouth of the stream, the flow rate thereat, etc., where the tidal current power generation structure of the present invention is installed.

The upper space of the tidal current power generation structure according to the present invention may be used as a space for the sake of architecture structures or life-based facilities. For this reason, the present invention is able to efficiently use the space.

### Modes for carrying out the invention

Figure 2 is a schematic view illustrating a configuration wherein a tidal current power generation structure according to an embodiment of the present invention, in which a plurality of equal-width watercourses have been disposed, is installed at a river near a sea or at the mount of a stream.

As illustrated in Figure 2, the tidal current power generation structure according to an embodiment of the present invention may include, but is not limited to, a plurality of watercourse banks 2, and first and second water collecting banks 3 and 4 which are disposed at the front and rear portions of each watercourse bank 2. In this way, three or more than three equal-width watercourses 200 may be provided, by means of which it is possible to enhance electric power generation efficiency in such a way to install the power generator at each equal-width watercourse 200.

As illustrated in Figure 2, the tidal current power generation structure according to an embodiment of the present invention may include, but is not limited to, a ship waterway structure 10 which is interposed between a terrain features 1 and a watercourse bank 2. The ship waterway structure 10 may include a ship waterway bank 11 which is disposed spaced apart at a predetermined interval from the terrain features 1 and is able to define a pass watercourse 300 having a predetermined width, which is formed between the terrain features 1 and the ship waterway bank 11. An equal-width watercourse side bank 12 having a predetermined length corresponding to the watercourse bank 2 is interposed between the ship waterway bank 11 and the watercourse bank 2. A first ship waterway water collecting bank 13 is disposed in front of the ship waterway bank 11 and the equal-width watercourse side bank 12 and is adapted to interconnect the ship waterway bank 11 and the equal-width watercourse side bank 12 and is disposed inwardly slanted toward the watercourse bank 2. The second ship waterway water collecting bank 14 is disposed behind the ship waterway bank 11 and the equal-width watercourse side bank 12 and is adapted to interconnect the ship waterway bank 11 and the equal-width watercourse side bank 12 and is disposed inwardly slanted toward the watercourse bank 2.

A pass watercourse 300 can be formed between the ship waterway bank 11 and the terrain features 1 with the aid of the ship waterway structure 10, so the water transportation means can pass. Even though the electric power generation structure is installed, the water transportation means is able to smoothly pass.

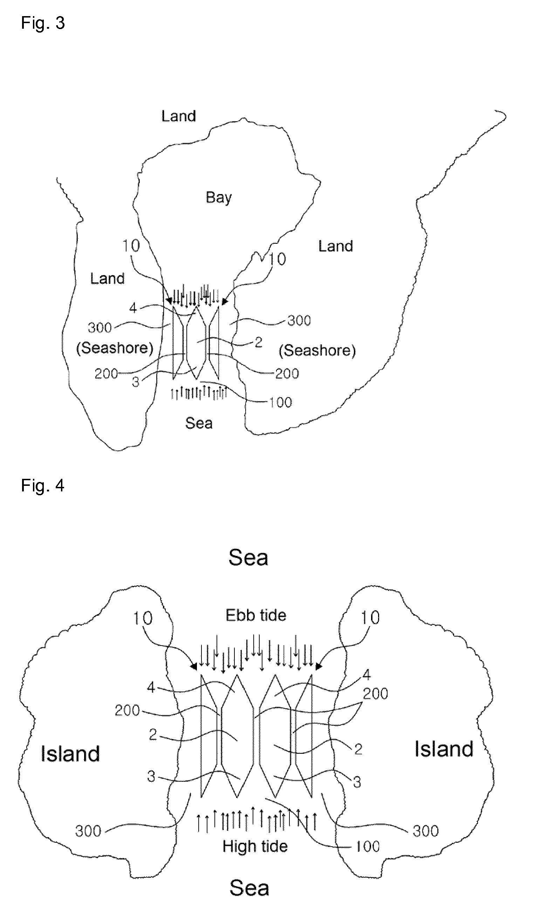

Figure 3 is a schematic view illustrating a configuration wherein a tidal current power generation structure according to an embodiment of the present invention is installed only at a seashore.

As illustrated in Figure 3, the tidal current power generation structure according to an embodiment of the present invention can be installed at a bay near a seashore. More specifically, the tidal current power generation structure according to the present invention can be installed using a terrain features which has been naturally built at a predetermined seashore. In this way, the tidal current power generation structure according to the present invention can be installed while minimizing any change to the natural environment.

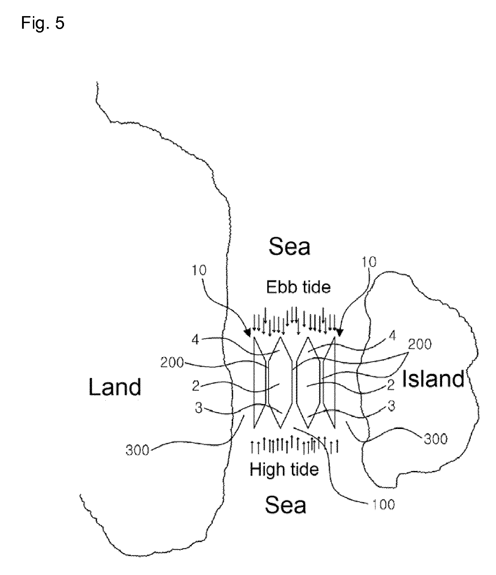

Figure 4 is a schematic view illustrating a configuration wherein a tidal current power generation structure according to an embodiment of the present invention is installed in a space defined between islands. Figure 5 is a schematic view illustrating a tidal current power generation structure according to an embodiment of the present invention is installed in a space defined between a seashore and an island.

As illustrated in Figure 4 or 5, the tidal current power generation structure according to an embodiment of the present invention can be installed in a space made between islands or between an island and a seashore. As illustrated in Figure 3, the tidal current power generation structure according to an embodiment of the present invention may be installed using a predetermined terrain features which has been naturally made near a seashore. In this way, the tidal current power generation structure according to an embodiment of the present invention can be installed while minimizing any change to the natural environment.

While the present invention has been described in details through the preferred embodiments, other forms of embodiments are also available. The technical concepts and scopes of the claims below are not limited by these embodiments.

### Industrial Applicability

The present invention can be applied to various types of tidal current power generation structures, and tidal current power generation methods.

## Claims

1. A tidal current power generation structure, comprising:
terrain features which are disposed spaced apart from each other at a first interval and include a watercourse formed for tidal current to move in the front and rear directions;
a watercourse bank which has a predetermined width narrower than the first interval and is provided at the watercourse, wherein an equal-width watercourse having a constant width is provided between the terrain features and the watercourse bank;
a first water collecting bank which is disposed at the watercourse and formed in the shape of a tip extending from the front end portion of the watercourse bank with respect to a moving direction of the tidal current, wherein the width of the first water collecting bank is gradually decreasing toward a front end portion of the equal-width watercourse; and
a second water collecting bank which is disposed at the watercourse and formed in the shape of a tip extending from the rear end portion of the watercourse bank with respect to a moving direction of the tidal current, wherein the width of the second water collecting bank is gradually decreasing toward the rear end portion of the equal-width watercourse.

2. The structure of claim 1, wherein the tidal current power generation structure further comprises a ship waterway structure which is disposed outside the watercourse bank and the first and second water collecting banks and at the watercourse, wherein the ship waterway structure comprises:
a ship waterway bank which is provided spaced apart from the terrain features and is adapted to form a pass watercourse having a predetermined width between the terrain features and the ship waterway bank;
an equal-width watercourse side bank which is disposed between the ship waterway bank and the watercourse bank and has a predetermined length corresponding to the watercourse bank with respect to the moving direction of the tidal current;
a first ship waterway water collecting bank which is provided in front of the ship waterway bank and the equal-width watercourse side bank with respect to the moving direction of the tidal current and is adapted to interconnect the ship waterway bank and the equal-width watercourse side bank, wherein the first ship waterway water collecting bank is formed inwardly slanted toward the watercourse bank; and
a second ship waterway water collecting bank which is provided behind the ship waterway bank and the equal-width watercourse side bank with respect to the moving direction of the tidal current and is adapted to interconnect the ship waterway bank and the equal-width watercourse side bank, wherein the second ship waterway water collecting bank is formed inwardly slanted toward the watercourse bank, wherein the ship waterway bank is longer than the equal-width watercourse side bank with respect to the moving direction of the tidal current.
